# EUROPEAN PATENT SPECIFICATION

(11) **EP 4 149 884 B1**
(45) Date of publication and mention of the grant of the patent: **09.08.2023**
(21) Application number: 21725833.4
(22) Date of filing: 10.05.2021
(51) Int. Cl.: C01B 33/12, C03B 19/10, C03C 1/00, C03C 11/00, C04B 14/24, C04B 20/00, C04B 20/04, C04B 20/06, C04B 20/10

(54) **EXPANDABLE SILICA PARTICLE**
EXPANDIERBARES SILICIUMDIOXIDTEILCHEN
PARTICULE DE SILICE EXPANSIBLE

(30) Priority: 10.05.2020 NO 20200545; 04.06.2020 NO 20200660
(43) Date of publication of application: 22.03.2023
(73) Proprietor: Valunor AG, 6302 Zug (CH)
(72) Inventor: SOLVANG, Finn Erik, 3120 Nøtterøy (NO); BLANK, Norman, 8803 Rüschlikon (CH)
(74) Representative: Lelkes, Robert
(86) International application number: PCT/IB2021/053938
(87) International publication number: WO 2021/229400

(56) References cited:
- WO-A1-2019/002561
- US-A- 4 234 330
- US-A1- 2009 146 108
- DATABASE WPI Week 200475 Thomson Scientific, London, GB; AN 2004-761442 XP002803905, & JP 2004 307226 A (CRYSTAL CLAY CORP) 4 November 2004 (2004-11-04)
- DATABASE WPI Week 198648 Thomson Scientific, London, GB; AN 1986-316765 XP002803906, & JP S61 236621 A (SEKISUI PLASTICS CO LTD) 21 October 1986 (1986-10-21)
- "Fluid improvement of mortar especially polymer-containing mortar, involves adding foam glass grain to mortar containing at least cement, aggregate and water", WPI / 2017 CLARIVATE ANALYTICS,, vol. 2004, no. 75, 4 November 2004 (2004-11-04), XP002803905,
- "Fine foamed glass granules prodn. - comprises kneading glass powder mixt. foaming agent and binder, forming into globules and coating with release agent", WPI / 2017 CLARIVATE ANALYTICS,, vol. 1986, no. 48, 21 October 1986 (1986-10-21), XP002803906,

## Description

### Technical Field

The present disclosure concerns an expandable silica particle, a method for expanding silica particles, expanded silica particles produced by the method, use of expanded silica particles and a method for producing an expandable silica particle.

### Background

Expanded silica particles are utilized in various areas, for example as a filler in matrix materials, like concrete or epoxy, as insulation material with various binder materials, or as water filtration medium. Several advantageous physical properties are associated with expanded silica particles, such as low density, high dimensional stability, excellent compression strength, and high insulation capacity. Expanded silica particles added to a matrix material may also improve the processability of the matrix material before hardening, for instance by improving flowability at very low water adsorption. Additionally, expanded silica particles may reduce overall material costs, in particular for expensive matrix materials. Finally, by utilizing post-consumer recycled glass, expanded silica materials contribute to environmental sustainability.

US 4,234,330 discloses a process for making cellulated glass beads by forming a mixture comprising glass particles and cellulating agent into nodules, heat-treating the nodules to cause fusion of the glass and evolution of gas from the cellulating agent.

US 2009/0146108 A1 discloses a method for preparing a low-density material and precursor for forming the same. The method comprises providing a precursor formed of an aqueous mixture of inorganic primary component and a blowing agent, drying the mixture and firing the mixture to activate the blowing agent to expand the precursor to form a low density material. In a preferred embodiment, the inorganic primary component comprises a silicate material.

JP H02-223488 B2 discloses a process for making a foamed glass grain by kneading glass powder and a foaming agent powder, forming the mixture into a spherical shape, coating a mold release agent thereon, and then drying, heating and foaming it. Natural glass powder, talc, and calcium carbonate powder are disclosed as mold release agents.

JP 2004-307226 A discloses foamed glass particles prepared by granulating waste glass to improve the flowability of mortar. The surface of the foam glass particles may be provided with a surface material having alkali-resistance such as kaolin, monmorillonite, pyrophyllite, talc, clay mica, greenlite, diatomaceous earth and silica fume.

WO 2019/002561 A1 discloses a method of preparing a glass granulate for use in manufacturing a foam glass pellet. The granulate is made by crushing glass into powder, mixing an expanding agent into the powder, and sintering the mixture in a sintering oven into a solid block at a temperature below the reaction temperature of the expanding agent. The block is crushed into granulates and separated into fraction size. The granulates can be coated with a dry powder to act as a release agent during foaming. The powder used as the release agent for the granulates can comprise 0.5-3 % of Al₂SiO₅ (kaolin), Al₂O₃, CaCO₃, or any other material that has a melting point above the maximum temperature in the expansion oven and do not react with the granulates to form a sticky surface.

During the production of expanded silica particles, it is desirable to utilize temperatures at which the expanding silica particles are close to the transition from a plastic state to a molten state. At these temperatures the material of the expanding silica particles provides least resistance to the ongoing expansion. Thereby a more optimal expansion and a more uniform spherical shape of the expanded silica particles is achieved. Problems in commonly used processes may, however, arise due to the expanding silica particles being close to the transition from the plastic state to the molten state. Close to this transition, the expanding silica particles are more prone to adhere to one another, and to the surrounding furnace in which the particles are expanded. Although a kaolin coating may be used as a release agent, kaolin transfers into metakaolin at temperatures close to the plastic-molten transition and may thereby lose most of its properties as a release agent. The metakaolin may also melt into the surface of the softened expanding silica particles, thereby further reducing its effectiveness as a release agent.

Furthermore, due to the low viscosity at temperatures close to the transition from the plastic state to the molten state, the interior cell walls may rupture, leading to an open-pored internal structure, whereas cells at the outer surface of the expanding silica particles may collapse. When using kaolin coating as a release agent, the surface of the expanding silica particles may additionally become more brittle, leading to a further risk of collapse of cells at the outer surface and consequently a deterioration in physical properties. These effects may lead to both weakened expanded silica particles and to an increased capacity of the expanded silica particles to adsorb fluids, such as water. Especially when used as a filler in a matrix material, like an organic or inorganic binder, a high adsorption capacity may cause the expanded silica particles to adsorb large quantities of the matrix material. Such an adsorption of matrix material negatively affects the properties of the expanded silica particles as a filler material. For instance, adsorbing concrete additives such as a water reducer, air entrainment agent, will have significant impact on flow behavior and mechanical properties in the cured state. This counteracts the desired effect of lowering the overall material density of matrix and filler.

Consequently, there is a clear need for an improved expandable silica particle, which can be expanded at a temperature close to the plastic-molten transition, while reducing the risk of adhesion of softened expandable silica particles to one another and / or to the furnace and reducing the risk of rupturing of internal cell walls and the risk of collapse of cells at the outer surface.

### Summary of the disclosure

The present disclosure concerns an expandable silica particle according to claim 1 and a method for producing expandable silica particles according to claim 7.

### Figure

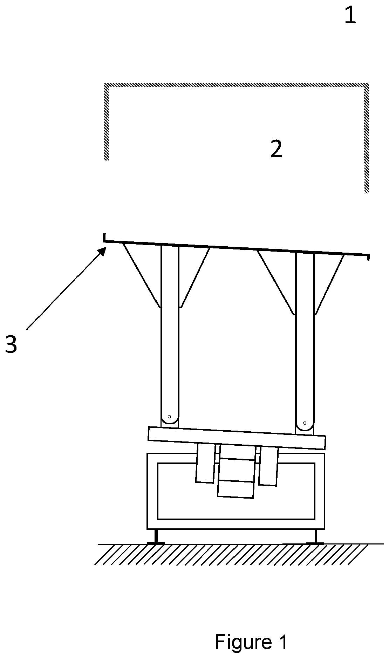

Figure 1 schematically shows a furnace for the heating of expandable silica particles according to the disclosure.

### Detailed description

An expandable silica particle according to the disclosure comprises silica powder, silica fume, and at least one expanding agent. The expandable silica particle further comprises a coating provided on the outer surface of the expandable silica particle, wherein the coating comprises kaolin powder and talc powder. Advantageously, kaolin acts as a release agent, whereas talc offsets the negative effects of kaolin at high temperatures by rendering the outer surface of the expanding silica particle more elastic and with closed cells. Optionally, the expandable silica particle may comprise further additives, such as a coloring agent. The expandable silica particle may have a bulk density of 0.3 - 1.7 kg/l, preferably 0.5 - 1.5 kg/l. The expandable silica particle may have a diameter of 0.1 - 40 mm, preferably 0.25 - 5.6 mm, most preferably 0.8 - 1.6 mm.

The expandable silica particle comprises 50 - 98 wt% of silica powder. The particles of the silica powder may have a diameter of 0.01 - 700 µm. Preferably, the silica powder comprises a recycled glass powder. Recycled glass powder may, for instance, be sourced from post-consumer recycled glass, soda lime glass, float glass, windscreens, solar panels. Advantageously, the expandable silica particles thereby form an environmentally friendly material.

The expandable silica particle may comprise 0.85 - 10 wt% of at least one expanding agent. The expanding agent may comprise a powder. Preferably, the particles of the expanding agent powder have a diameter of 0.01 - 40.0 µm. The at least one expanding agent may comprise aluminum nitride (AIN), silicon carbide (SiC), manganese dioxide (MnO₂), sodium carbonate (NasCOs), calcium sodium carbonate (CaNasCOs) or combinations thereof. Preferably, the at least one expanding agent comprises silicon carbide powder.

The expandable silica particle may comprise 0.01 - 10 wt% of silica fume. Silica fume comprises ultrafine silica particles with a particle diameter below 1 µm. Preferably, the diameter of the silica fume particles is around 150 nm. Advantageously, the silica fume strengthens the walls of the cells that are formed in the expandable silica particle during expansion. Thereby, rupturing of the cell walls during expansion is reduced. Due to the strengthened cell walls and due to the reduced occurrence of rupturing of cell walls, the resulting expanded silica particle has a higher strength and a higher crush resistance with significantly reduced water adsorption.

The coating may comprise 0.5 - 10 wt% of kaolin powder (Al₂SiO₅(HO)₄). Advantageously, the kaolin acts as a release agent. Thereby the risk of adhesion of expandable silica particles to one another and / or to the furnace is reduced. This is especially important for large production volumes, where numerous particles are expanded simultaneously. Nevertheless, endothermic dehydration of kaolin takes place in the temperature interval 560 - 950°C, producing metakaolin that will gradually reduce the effect of kaolin as a release agent. Therefore, the coating further comprises talc powder (Mg₃Si₄O₁₀(OH)₂). The coating may comprise 0.5 - 5 wt% of talc powder. Advantageously, during expansion the talc powder melts into the surface of the expanding silica particle and renders the surface more elastic or flexible, thereby reducing the collapse of cells at the outer surface of the expanding silica particle. Consequently, the talc powder counteracts the adverse effect of kaolin, occurring at high temperatures, and acts to maintain the surface integrity of the expanding silica particle. Thereby, the resistance against fluid adsorption in the expanded silica particle is improved.

A method for preparing one or more expandable silica particles according to the disclosure is next described. The method comprises providing expandable silica pre-particles comprising silica powder, silica fume and at least one expanding agent. Providing expandable silica pre-particles may comprise the sintering or heat-pressing of a mixture of silica powder, silica fume and at least one expanding agent into a block at a temperature below the activation temperature of the at least one expanding agent. The block may then be divided into expandable silica pre-particles, for instance by cutting or by crushing the sintered block into granules. The granules may be filtered according to size and large granules may be subjected to further dividing. Alternatively, the mixture of silica powder, silica fume and at least one expanding agent may be heat-pressed directly into expandable silica pre-particles. Further alternatively, the mixture of silica powder, silica fume and at least one expanding agent may be provided with a binder and processed in an industrial pelletizer. The method for preparing one or more expandable silica particles further comprises the step of coating the outer surface of the expandable silica pre-particle with a coating comprising kaolin and talc, to thereby form an expandable silica particle.

A method for producing expanded silica particles comprises providing a plurality of expandable silica particles according to the disclosure and heating the expandable silica particles in a chamber 2 of a furnace 1 to above the activation temperature of the expanding agent to form expanded silica particles. The expandable silica particles may be fed into the chamber 2 (schematically shown in fig. 1) by a feeding system. In the chamber 2, the expandable silica particles may be fed onto an angled, vibrating plate body. A directional, high frequent motion may thereby be induced in the expandable silica particles, wherein the motion may be chaotic or turbulent. Preferably, the expandable silica particles may first be fed into a preheating chamber, before being fed or conveyed into the chamber 2. Advantageously, the temperature difference between the core and the surface of the expandable silica particles are minimized during preheating. In the chamber 2, the expandable silica particles are heated to above the activation temperature of the expanding agent, to a temperature of 560 - 950°C, preferably 850 - 900°C. During heating the expandable silica particles are softened. Above the activation temperature of the expanding agent, an exotherm reaction occurs, driving expansion of the softened particles. Advantageously, the coating on the outer surface of the expandable silica particles isolates the outer surface during exotherm-driven expansion. Thereby, the expansion process is counteracted at the surface of the expanding silica particles, resulting in a denser outer surface of the expanded silica particles, with less open cells as compared to particles without coating.

Within the chamber 2 the temperature and the residence time may be controlled, thereby controlling the expansion rate of the expandable silica particles. The residence time may be controlled by controlling the conveying speed of the particles in the chamber 2. The furnace 1 may further comprise a vibration plate 3, forming the bottom of the chamber 2. The vibration plate 3 is preferably inclined by an inclination angle with respect to the horizontal direction, from the entry downward to the exit of the furnace. The vibration plate 3 is vibrated during the heating and expansion of the expandable silica particles, thereby inducing motion in the expandable silica particles. Advantageously, the contact time between silica particles in the furnace 1 is thereby limited, such that the risk for adhesion of particles to one another and to the furnace is minimized.

Upon exiting the furnace 1, the expanded silica particles may enter a cooling zone, comprising one or more stages kept at progressively lower temperatures. The expanded silica particles are preferably cooled to ambient temperature in the cooling zone, allowing further handling of the expanded silica particles. Within the cooling zone the temperature and the residence time for each stage may be controlled, thereby controlling the cooling rate of the expanded silica particles. Advantageously, internal tension within the expanded silica particles due to differential cooling rates at the particle surface and in the particle-interior may thereby be minimized. Following cooling, the expanded silica particles may be coated with a sodium silicate solution, also known as water glass, preferably at a temperature of 0.1 - 200°C. Advantageously, the sodium silicate solution further reduces surface porosity of the expandable silica particle, thereby improving resistance against fluid adsorption in the expanded silica particle.

An expanded silica particle according to the disclosure preferably has a bulk density of 150 - 900 g/l. Preferably, the expanded silica particle has a spherical or close to spherical shape. The expanded silica particle may be used as a filler in concrete, plaster, gypsum, mortar, epoxy, polyurethane, acrylate or a suitable organic binder, or artificial turf or as a filler in water filtration cartridges. Advantageously, the expanded silica particle has a significantly reduced fluid adsorption capacity and may, for instance, adsorb a negligible amount of concrete additives when used as a filler in a concrete matrix material.

### Example 1

Expandable silica pre-particles were provided by sintering 95 wt% of silica powder, 3 wt% of SiC powder expanding agent and 2 wt % of silica fume at 710°C into a block. The silica powder comprises recycled flat glass. The SiC powder had a particle diameter of 0.01 - 2 µm. The sintered block was then crushed into expandable pre-particles, which were filtered according to particle diameter. The expandable pre-particles were dry-coated with a coating comprising kaolin powder and talc powder, to form expandable silica particles. The expandable silica particles comprised 91.2 wt% of silica powder, 2.88 wt% of SiC powder, 1.92 wt % of silica fume, 2 wt% kaolin powder and 2 wt% talc powder. The expandable silica particles were preheated at 680°C for a period of 300 s, before being heated to 870°C for 36 s. Heating was then continued at 865°C for 45 s and at 860°C for 45 s, before cooling commenced, at 200°C for 18 s. The resulting expanded silica particles had a bulk density (determined according to UNI EN 1097-6:2013, appendix C) of 275 g/l and a diameter (determined according to sieving method of UNI EN 933-1: 2012) of 2 - 8 mm. Crushing resistance of the expanded silica particles, determined according to UNI EN 13055-1:2003, appendix A, par. 4.10, was measured to be 6.19 N/mm². Water adsorption determined according to UNI EN 1097-6:2013 (appendix C - adsorption after 5 minutes) was measured to be 4.4%.

### Comparative example

Expandable silica pre-particles were provided by sintering 97 wt% of silica powder and 3 wt% of SiC powder expanding agent at 710°C into a block. The silica powder comprised recycled flat glass. The SiC powder had a particle diameter of 0.01 - 2 µm. The sintered block was then crushed into expandable pre-particles, which were filtered according to particle diameter. The expandable pre-particles were then dry-coated with a coating comprising kaolin powder, to form expandable silica particles. The expandable silica particles comprised 93.12 wt% of silica powder, 2.88 wt% of SiC expanding agent and 4 wt% of kaolin coating. The expandable silica particles were heated and cooled according to the same regime as in Example 1. Bulk density, particle diameter, water adsorption and crushing resistance were determined according to the same standards as cited for Example 1. The resulting expanded silica particles had a particle diameter of 2 - 8 mm, a bulk density of 300 g/l for the segment with particle diameters of 2 - 4 mm and a bulk density of 275 g/l for the segment with particle diameters of 4 - 8 mm. The expanded silica particles had a water adsorption of 24.2 % for the segment with particle diameters of 2 - 4 mm and of 21,9% for the segment with particle diameters of 4 - 8 mm. Finally, the expanded silica particles in the comparative example had a crushing resistance of 3.5 N/mm² for the segment with particle diameters of 2 - 4 mm and of 2.7 N/mm² for the segment with particle diameters of 4 - 8 mm.

## Claims

1. Expandable silica particle comprising:
50 - 98 wt% of silica powder;
0.85 - 10 wt% of at least one expanding agent;
0.01 - 10 wt% of silica fume and
a coating, provided on the outer surface of the expandable silica particle, wherein the coating comprises kaolin powder and talc powder.

2. Expandable silica particle according to claim 1, wherein the silica powder comprises recycled glass powder.

3. Expandable silica particle according to claim 1 or 2, wherein the at least one expanding agent comprises a powder, comprising aluminum nitride, silicon carbide, manganese dioxide, sodium carbonate, calcium sodium carbonate, or combinations thereof; and
wherein the particles of the expanding agent powder preferably have a diameter of 0.01 - 40 µm.

4. Expandable silica particle according to any one of claims 1 - 3, wherein the at least one expanding agent comprises a silicon carbide powder.

5. Expandable silica particle according to any one of claims 1 - 4, wherein the expandable silica particle has a diameter of 0.25 - 5.6 mm.

6. Expandable silica particle according to any one of claims 1 - 5, wherein the expandable silica particle has a bulk density of 0.3 - 1.7 kg/l.

7. Method for producing one or more expandable silica particles according to any one of claims 1 - 6, the method comprising:
providing expandable silica pre-particles comprising 50 - 98 wt% of silica powder, 0.01 - 10 wt% of silica fume and 0.85 - 10 wt% of at least one expanding agent; and
dry-coating the expandable silica pre-particle with a coating comprising kaolin and talc, to form expandable silica particles.

8. The method according to claim 7, wherein the step of providing expandable silica pre-particles comprises:
sintering or heat-pressing a mixture of silica powder, silica fume and at least one expanding agent into a block at a temperature below the activation temperature of the at least one expanding agent; and
dividing the block into expandable silica pre-particles.

## Patentansprüche

1. Expandierbares Siliciumdioxidpartikel, umfassend:
50 - 98 Gewichtsprozent Siliciumdioxidpulver,
0,85 - 10 Gewichtsprozent mindestens eines Expansionsmittels;
0,01 -10 Gewichtsprozent Siliciumdioxidstaub, und
eine Beschichtung, bereitgestellt auf der äußeren Oberfläche des expandierbaren Siliciumdioxidpartikels, wobei die Beschichtung Kaolinpulver und Talkpulver umfasst.

2. Expandierbares Siliciumdioxidpartikel nach Anspruch 1, wobei das Siliciumdioxidpulver recyceltes Glaspulver umfasst.

3. Expandierbares Siliciumdioxidpartikel nach Anspruch 1 oder 2, wobei das mindestens eine Expansionsmittel ein Pulver umfasst, umfassend Aluminiumnitrid, Siliciumcarbid, Mangandioxid, Natriumcarbonat, Calciumnatriumcarbonat oder Kombinationen davon; und wobei die Partikel des Expansionsmittelpulvers vorzugsweise einen Durchmesser von 0,01 bis 40 µm aufweisen.

4. Expandierbare Siliciumdioxidpartikel nach einem der Ansprüche 1 - 3, wobei das mindestens eine Expansionsmittel ein Siliciumcarbidpulver umfasst.

5. Expandierbares Siliciumdioxidpartikel nach einem der Ansprüche 1 - 4, wobei das expandierbare Siliciumdioxidpartikel einen Durchmesser von 0,25 bis 5,6 mm aufweist.

6. Expandierbares Siliciumdioxidpartikel nach einem der Ansprüche 1 - 5, wobei das expandierbare Siliciumdioxidpartikel eine Schüttdichte von 0,3 bis 1,7 kg/l aufweist.

7. Verfahren zum Herstellen eines oder mehrerer expandierbarer Siliciumdioxidpartikel nach einem der Ansprüche 1 - 6, das Verfahren umfassend:
Bereitstellen von expandierbaren Siliciumdioxid-Vorpartikeln, umfassend 50 - 98 Gewichtsprozent Siliciumdioxidpulver, 0,01 - 10 Gewichtsprozent Siliciumdioxidstaub und 0,85 - 10 Gewichtsprozent mindestens eines Expansionsmittels; und
Trockenbeschichten des expandierbaren Siliciumdioxid-Vorpartikels mit einer Kaolin und Talk umfassenden Beschichtung, um expandierbare Siliciumdioxidpartikel zu bilden.

8. Verfahren nach Anspruch 7, wobei der Schritt eines Bereitstellens von expandierbaren Siliciumdioxid-Vorpartikeln Folgendes umfasst:
Sintern oder Wärmepressen eines Gemischs aus Siliciumdioxidpulver, Siliciumdioxidstaub und mindestens einem Expansionsmittel zu einem Block bei einer Temperatur unterhalb der Aktivierungstemperatur des mindestens einen Expansionsmittels; und
Aufteilen des Blocks in expandierbare Siliciumdioxid-Vorpartikel.

## Revendications

1. Particule de silice expansible comprenant :
50 à 98 % en poids de poudre de silice ;
0,85 à 10 % en poids d'au moins un agent d'expansion ;
0,01 à 10 % en poids de fumée de silice et
un enrobage, pourvu sur la surface externe de la particule de silice expansible, ledit enrobage comprenant de la poudre de kaolin et de la poudre de talc.

2. Particule de silice expansible selon la revendication 1, ladite poudre de silice comprenant une poudre de verre recyclée.

3. Particule de silice expansible selon la revendication 1 ou 2, ledit au moins un agent d'expansion comprenant une poudre, comprenant du nitrure d'aluminium, du carbure de silicium, du dioxyde de manganèse, du carbonate de sodium, du carbonate de calcium et de sodium, ou des combinaisons de ceux-ci ; et lesdites particules de la poudre d'agent d'expansion comportant de préférence un diamètre de 0,01 à 40 µm.

4. Particule de silice expansible selon l'une quelconque des revendications 1 à 3, ledit au moins un agent d'expansion comprenant une poudre de carbure de silicium.

5. Particule de silice expansible selon l'une quelconque des revendications 1 à 4, ladite particule de silice expansible comportant un diamètre de 0,25 à 5,6 mm.

6. Particule de silice expansible selon l'une quelconque des revendications 1 à 5, ladite particule de silice expansible comportant une masse volumique apparente de 0,3 à 1,7 kg/l.

7. Procédé de production d'une ou plusieurs particules de silice expansibles selon l'une quelconque des revendications 1 à 6, le procédé comprenant :
la fourniture de pré-particules de silice expansibles comprenant 50 à 98 % en poids de poudre de silice, 0,01 à 10 % en poids de fumée de silice et 0,85 à 10 % en poids d'au moins un agent d'expansion ; et
l'enrobage à sec de la pré-particule de silice expansible avec un enrobage comprenant du kaolin et du talc, pour former des particules de silice expansibles.

8. Procédé selon la revendication 7, ladite étape de fourniture de pré-particules de silice expansibles comprenant :
le frittage ou le thermo-pressage d'un mélange de poudre de silice, de fumée de silice et d'au moins un agent d'expansion en un bloc à une température inférieure à la température d'activation dudit au moins un agent d'expansion ; et
la division du bloc en pré-particules de silice expansibles.
